# EUROPÄISCHE PATENTSCHRIFT

(11) **EP 1 650 589 B1**
(45) Veröffentlichungstag und Bekanntmachung des Hinweises auf die Patenterteilung: **31.10.2012**
(21) Anmeldenummer: 05020970.9
(22) Anmeldetag: 27.09.2005
(51) Int. Cl.: G02B 7/00, G02B 21/06

(54) **Mikroskop mit einer Vorrichtung zur Erkennung optischer Bauteile**
Microscope having a device for recognition of optical components
Microscope avec dispositif de réconnaissance de composants optiques

(30) Priorität: 04.10.2004 DE 102004048846
(43) Veröffentlichungstag der Anmeldung: 26.04.2006
(73) Patentinhaber: Carl-Zeiss Jena GmbH, 07745 Jena (DE)
(72) Erfinder: Klose, Heinrich, 07745 Jena (DE); Höring, Lutz, 73447 Oberkochen (DE); Mitzkus, Reiner, 37085 Göttingen (DE); Nolte, Andreas, 37124 Rosdorf / Mengershausen (DE)

(56) Entgegenhaltungen:
- EP-A- 0 638 788
- DE-A1- 3 606 755
- DE-A1- 10 217 545
- US-A1- 2002 085 293
- US-A1- 2003 206 296
- US-A1- 2004 061 861

## Beschreibung

Die Erfindung betrifft ein Mikroskop mit einer Vorrichtung zur automatischen Erkennung optischer Bauteile, welche sich im Strahlengang des Mikroskops befinden oder z.B. mittels eines Revolvers oder Schiebers in diesen einbringen lassen sowie das zugehörige Verfahren zur Erkennung dieser Bauelemente.

In Mikroskopen, insbesondere in solchen zur Fluoreszenzuntersuchung biologischer oder technischer Objekte, aber auch in Laser Scanning Mikroskopen (LSM) oder Fluoreszenz-Korrelations-Mikroskopen (FCS) kommt eine ganze Reihe interner optischer Bauelemente, welche bestimmte spektrale Charakteristika haben, wie Farbfilter, Farbteiler, Filtersätze u.ä. zum Einsatz. Dabei wird im Folgenden als Filtersatz die Kombination eines Anregungsfilters, eines Farbteilers und eines Emissionsfilters in einem optischen Bauelement verstanden. Diese verschiedenen Filtersätze werden von den Mikroskopherstellern angeboten. Diese optischen Bauelemente müssen für die jeweilige Untersuchungsmethode bzw. Fluorophor oder Fluorophorkombination (wie FITC, DAPI, GFP usw.) genau aufeinander abgestimmt bzw. korrekt ausgewählt sein. Damit das jeweilige Mikroskop nicht nur für eine Untersuchungsmethode anwendbar ist müssen diese Bauelemente unkompliziert und schnell durch den Benutzer wechselbar sein. Aus diesem Grund ist im Allgemeinen eine Anzahl verschiedener Filter, Teiler oder Filtersätze in Revolver oder Schiebern angebracht, mit deren Hilfe sie motorisch oder manuell schnell in den Strahlengang des Mikroskops gebracht werden können. Diese weisen jedoch aus Platzgründen nur eine begrenzte Zahl von Positionen für diese Bauelemente auf (ca. 3 bis 10). Um die gewünschte Variabilität für den Kunden darüber hinaus zu gewährleisten sind diese Revolver oder Schieber auch vom Kunden bestückbar. Kommt es bei dieser Bestückung oder bei der Zuordnung der Bauelemente zu ihren Positionen zu Fehlern werden zumindestens die Untersuchungsergebnisse verfälscht, in vielen Fällen werden auch gar keine Ergebnisse gewinnbar sein.

Aus diesem Grund besteht das Bedürfnis nach einer Einrichtung, mit deren Hilfe die spektralen Charakteristika dieser verschiedenen Bauelemente im eingebauten Zustand, d.h. innerhalb des Mikroskops, bestimmt werden können, um zu erkennen, ob die Bestückung korrekt erfolgt ist bzw. in welcher Position welches Filter angeordnet ist

In der DE 102 17 545 der Anmelderin wird dazu vorgeschlagen, außerhalb des eigentlichen Mikroskopstrahlengangs eine Weißlichtquelle und einen Dreifarbsensor so anzubringen, dass die Strahlung der Weißlichtquelle nach Wechselwirkung mit einem in einem Revolver oder Schieber befindliches optischen Bauelement von dem Dreifarbsensor gemessen wird und an Hand dieses Messergebnisses eine Zuordnung anhand der ermittelten Farbkennzahlen zu in einer Tabelle abgelegten Spektraldaten erfolgt. Damit ist eine Erkennung der Bauelemente im Prinzip möglich. Allerdings weist diese Lösung eine Reihe von Nachteilen auf, so ist es notwendig eine Kalibrierung der Lichtquelle vorzunehmen, außerdem lassen sich mit den gewonnenen Messwerten nicht alle Filter eindeutig unterscheiden. Die DE 102 17 545 erwähnt auch die Möglichkeit einen nicht näher spezifizierten Spektralsensor zu verwenden, gibt aber auch für diesen Fall keine andere Lösung für die Zuordnung der Bauelemente an als die für den Dreifarbsensor beschriebene.

Der Erfindung liegt die Aufgabe zu Grunde, die beschriebenen Nachteile des Standes der Technik zu überwinden und eine universell einsetzbare und einfachere Vorrichtung zur Erkennung optischer Bauelemente sowie das zugehörige Erkennungsverfahren anzugeben.

Diese Aufgabe wird gelöst durch die Merkmale des unabhängigen Anspruchs, vorteilhafte Weiterentwicklungen sind in den abhängigen Ansprüchen angegeben.

Dabei ist es besonders vorteilhaft, wenn die Bestimmung der spektralen Eigenschaften der Bauelemente an einer diskreten Anzahl von Wellenlängen erfolgt, wobei diese Zahl größer ist als drei und im wesentlichen kleiner als zwanzig ist.

Die Verhältnisbildung zwischen den einzelnen Messungen hat den besonderen Vorteil, dass die Ergebnisse unabhängig von der Intensität der Lichtquelle sind, damit kann eine beim Stand der Technik notwendige Kalibrierung entfallen.

Eine besonders einfach aufgebaute Lösung ergibt sich, wenn das Licht nach der Wechselwirkung mit dem optischen Bauelement räumlich in diskrete Spektralanteile aufgeteilt wird, welche über Sensorzeilen oder diskret angeordnete Sensoren erfasst werden. Alternativ kann es vorteilhaft sein, als Lichtquelle eine durchstimmbare oder diskret aus einzeln ansteuerbaren LED's aufgebaute Quelle zu benutzen. Dann ist nur ein Sensor mit entsprechend breitbandiger Empfindlichkeit nötig.

Da die Fotoströme der Sensoren eine große Dynamik aufweisen ist es besonders vorteilhaft diese durch einen logarithmischen Verstärker zu messen und die dabei generierten logarithmischen Spannungswerte einem Analog-Digital-Wandler zuzuführen.

Die Erfindung wird im folgenden an Hand der Zeichnungen näher erläutert.

Es zeigen:
Fig. 1 eine schematische Darstellung eines Beispiels
Fig. 2 eine schematische Darstellung einer multispektralen Lichtquelle
Fig. 3 eine Übersicht über die spektralen Charakteristika verfügbarer LED's
Fig. 4 eine schematische Darstellung einer Anordnung zur Bestimmung der spektralen Charakteristik eines Filters
Fig. 5-7 verschiedene Beispiele einer Anordnung zur Bestimmung der spektralen Charakteristik eines Filtersatzes.
Fig. 8 bis 10 verschiedene Ausführungsbeispiele einer Anordnung zur Bestimmung der spektralen Charakteristik eines Filtersatzes.
Fig. 11 eine schematische Darstellung eines Mikroskops mit einem Filtersatz

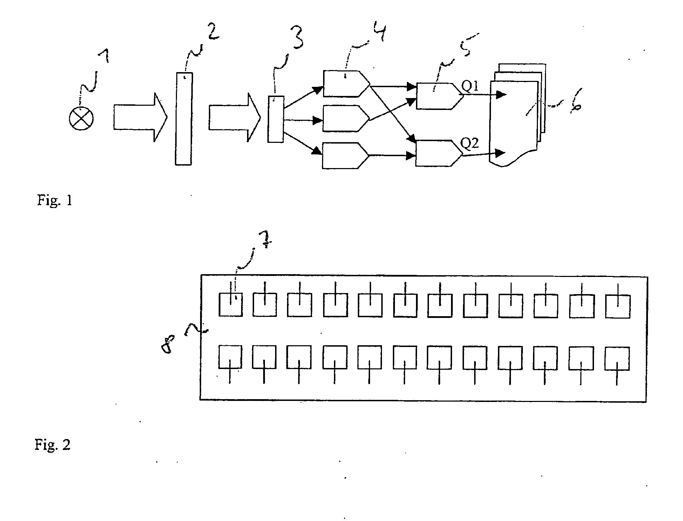

   In Fig. 1 wird das Licht einer Weißlichtquelle 1 auf das zu erkennende optische Bauelement 2, z.B. einen Filter, gerichtet und das nach der Wechselwirkung mit diesem Bauelement veränderte Lichtspektrum von einem spektralen Sensor 3 aufgefangen. Das entstehende Signal des Sensors 3 wird in einer oder mehreren Aufbereitungseinheiten 4, welche je einen logarithmischen Verstärker und einen Analog-Digital-Wandler enthält, in digitale Werte umgesetzt und einer oder mehreren Recheneinheiten 5 zugeführt. Diese bilden nach einem vorgegebenen Schema die Verhältnisse zwischen den den einzelnen Spektralbereichen zugeordneten Messwerten. Ein Beispiel für eine solche Vorschrift ist
   Q1=W2/W1
   Q2=W3/W1
   Q3=W4/W1 usw.
   wobei die Qi die Verhältnisse und die Wi die Werte für die einzelnen Spektralbereiche ist, aber auch andere Formen der Verhältnisbildung der Werte untereinander sind möglich.

Diese Qi werden dann mit entsprechenden in der Datenbank abgespeicherten Werten für bekannte Bauelemente verglichen und bei Übereinstimmung, z.B. innerhalb eines bestimmten Toleranzbandes (z. B. 5% des Wertes), als das entsprechende Bauelement identifiziert. Damit kann dann z.B. der Name des Bauelementes dargestellt oder auch dem Bauelement entsprechende Steuerparameter für das Mikroskop generiert werden.

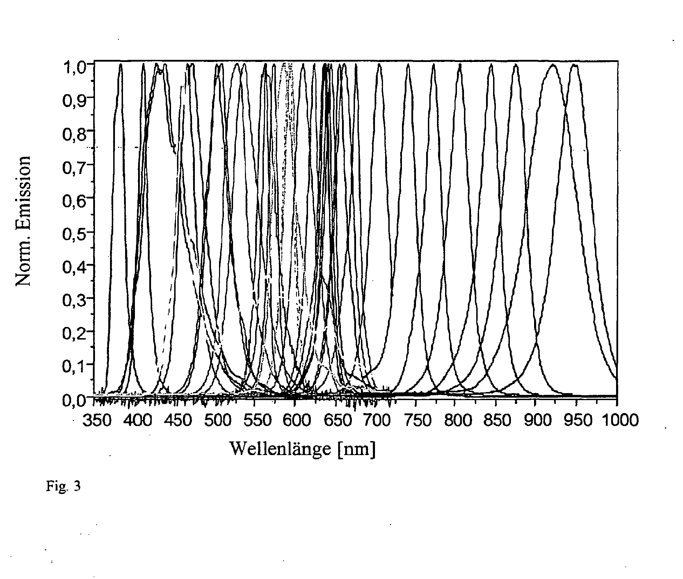

Anstelle der Weißlichtquelle in Fig. 1 lässt sich auch eine spektral durchstimmbare Lichtquelle benutzen, bei der die Werte für die einzelnen diskreten Spektralbereiche zeitlich hintereinander gewonnen werden. Ein Beispiel für eine solche durchstimmbare Lichtquelle ist in Fig. 2 schematisch dargestellt. Diese besteht aus einem Array von diskreten LED's 7 (LED = Light emitting diode), welche auf einen Träger 8 angeordnet sind. Dabei weisen diese LED's jeweils verschiedene spektrale Abstrahlcharakteristika auf, so dass durch entsprechendes Ansteuern der einzelnen Elemente die auf das optische Bauelement fallende Strahlung in ihrem Spektralbereich verändert wird. Fig. 3 zeigt dazu in einem Überblick, welche Spektralbereiche zur Zeit mit LED's realisierbar sind. Wie in Fig. 3 dargestellt sind schmalbandige LED's in den folgenden Wellenlängen [jeweils in nm] verfügbar: 350, 370, 3 80, 405, 430, 465, 505, 530, 570, 580, 595, 605, 615, 630, 660, 700, 740, 770, 810, 840, 880, 920. Durch schnelles sequentielles Schalten der einzelnen LED's kann ein Spektrum" aus etwa 20-30 Stützstellen mit Hilfe einer einzelnen Photodiode registriert und ausgewertet werden. Der Aufbau dieses Beispiels ist analog zu Fig. 1, nur dass jetzt statt der Weißlichtquelle 1 die spektral durchstimmbare Lichtquelle aus Fig. 2 zum Einsatz kommt, damit ist als Sensor 3 nur eine Photodiode mit entsprechend breiter Empfindlichkeit notwendig, die Verarbeitung der Messwerte erfolgt dann sequentiell in Anpassung an den sequentiellen Wechsel der abgestrahlten Wellenlängen der spektral durchstimmbaren Lichtquelle 1, aber ansonsten analog dem bereits beschriebenen Verfahren.

Die folgenden Ausführungsbeispiele sind analog zu Fig. 1 mit Weißlichtquelle und spektralem Sensor beschrieben, es ist aber genauso möglich die spektral durchstimmbare Lichtquelle aus Fig. 2 und nur einen einzelnen Sensor oder ein Sensorarray zu benutzen, welches über eine entsprechend breite Wellenlängenempfindlichkeit verfügt.

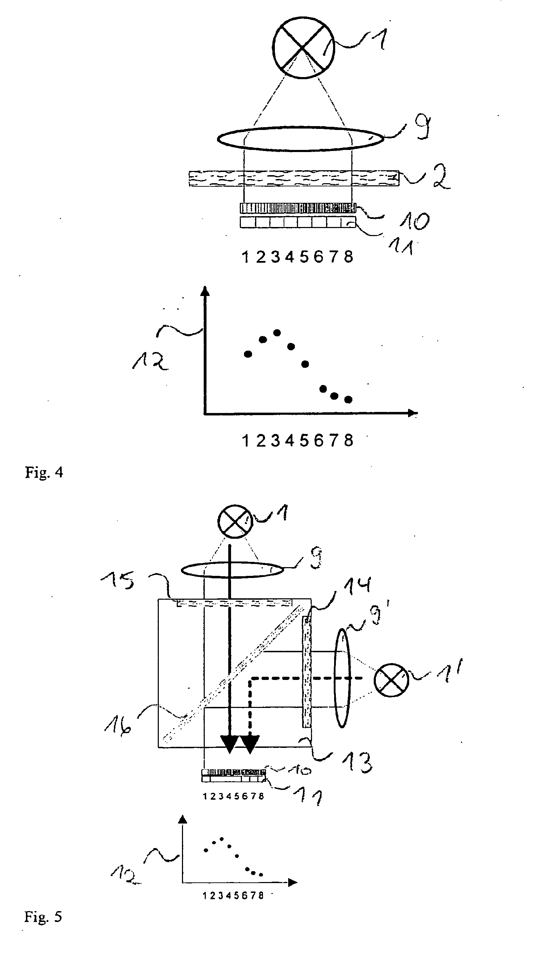

Fig. 4 zeigt in einem Beispiel eine Nutzung zur Bestimmung eines Filters.

Das Licht einer Weißlichtquelle 1 (beispielsweise einer weißen LED, einer Halogenlampe, einer weißen Leuchtstofflampe usw.) wird über eine Optik zu einem vorzugsweise parallelen Lichtbündel aufbereitet. Dieses Lichtbündel durchstrahlt das Filter 2 bzw. die optische Komponente mit wellenlängenselektiven Eigenschaften. Je nach Charakter der Komponente werden die unterschiedlichen Farben des Lichtes, physikalisch durch die Wellenlänge definiert, verschieden stark gedämpft bzw. durchgelassen.

Auf der Empfängerseite", d.h. nach dem Filter 2, befindet sich eine Komponente 10, die das weiße Licht in seine Farben räumlich aufspaltet. Dies kann durch ein Verlauffilter, eine Kombination von Einzelfilter, ein optisches Gitter, ein Prisma oder dergleichen umgesetzt sein. Hinter der räumlichen Trennung wird eine Detektorzeile 11 oder einzelne Detektoren bzw. Sensoren so positioniert, dass jeder einzelnen Fotodiode ein bestimmtes Wellenlängenband zugeordnet ist. Die Anzahl der Fotodioden bestimmt die notwendige Genauigkeit der Erkennung. Das Beispiel zeigt die Verwendung von 8 Fotodioden, was zur Erkennung der üblichen Filter ausreichend ist.

Je nach Filter 2 und dessen Wellenlängenselektion werden die (hier schematisch aufgetragenen) Signale 12 der Fotodioden 11, die den einzelnen Wellenlängenbändern zugeordnet sind, unterschiedliche Amplituden aufweisen.

Das Verhältnis der Amplituden untereinander charakterisiert das Filter.

Durch die Verhältnisbildung der einzelnen Signalamplituden zur maximalen Amplitude der Fotodiodensignale ist die Erkennung weitgehend unabhängig von der Intensität der

Lichtquelle.

Je nach den zu detektierenden Wellenlängenbändern sind die Detektoren, die Komponenten zur räumlichen Aufspaltung der Wellenlängen und die Lichtquelle aufeinander abzustimmen. Die dazu notwendigen Überlegungen sind dem Fachmann geläufig.

Nach Analog-Digital-Wandlung werden die Fotodiodensignale durch einen Rechner, der beispielsweise ein Mikroprozessor mit einem entsprechenden Programm sein kann, mit in einer Datenbank für die bekannten Filter abgespeicherten Daten verglichen. Um eventuelle Ungenauigkeiten auszugleichen wird bei diesem Vergleich ein Toleranzkriterium angewendet. Dieses Toleranzkriterium kann z.B. bei 5% der einzelnen Daten festgelegt werden. Ein alternatives Vorgehen besteht darin, die bestimmten Werte für die einzelnen Spektralbereiche mit den in der Datenbank abgespeicherten Werten zu vergleichen und jeweils die Summe der Absolutbeträge der Differenzen zu bestimmen, als erkannt gilt dann das Filter bei dem diese Summe an kleinsten ist. Gleichfalls kann vor der Analog-Digital-Wandlung eine Verstärkung mit einem logarithmischen Verstärker erfolgen.

Anhand der verglichenen Daten kann das Filter zuverlässig ermittelt werden.

Sollte ein neues Filter erkannt werden, das noch nicht in der Datenbank abgespeichert ist, so kann der Anwender dieses Filter bei der ersten Messung selbst definieren und den Namen zusammen mit den charakteristischen Werten der Datenbank hinzufügen.

Jede weitere Erkennung erfolgt dann automatisch.

Fig. 5 zeigt in einem ersten Beispiel eine Nutzung zur Bestimmung bzw. Erkennung eines Filtersatzes.

Analog zur Filtererkennung nach Fig. 4 wird das Licht von zwei Weißlichtquellen 1, 1' über je eine Optik 9, 9' zu je einem vorzugsweise parallelen Lichtbündel aufbereitet.

Diese Lichtbündel durchstrahlen den Filtersatz 13, der aus Anregungsfilter 14, Emissionsfilter 15 und Teilerspiegel 16 besteht so, dass das über den Teilerspiegel vereinigte Licht über die spektral aufspaltende Komponente 10 auf den Detektor 11 fällt. Je nach spektralem Charakter der Komponenten Filter und Teiler werden die unterschiedlichen Farben des Lichtes, physikalisch durch die Wellenlänge definiert, verschieden stark gedämpft bzw. durchgelassen.

Dies erfolgt im Emissionsstrahlengang durch die Kombination Emissionsfilter und Farbteiler in Transmission.

Im Anregungsstrahlengang wird das Licht, das von dem Anregungsfilter noch durchgelassen wird, vom Farbteiler reflektiert. Das spektrale Produkt" der Transmission des Anregungsfilters und der Reflexion des Farbteilers werden detektiert und ausgewertet. Werden beide Strahlengänge gleichzeitig ausgewertet, so werden die Summe der Spektraldaten vom Anregungs- und Emissionsstrahlengang gemessen. Wiederum wird das Verhältnis der Messwerte für die einzelnen Spektralbereiche gebildet und mit den in einer Datenbank abgespeicherten Werten bekannter Filtersätze verglichen.

Alternativ lassen sich auch durch sequentielles Einschalten der Weißlichtquellen 1, 1' die Spektraldaten des Anregungs- und des Emissionsstrahlenganges nacheinander bestimmen.

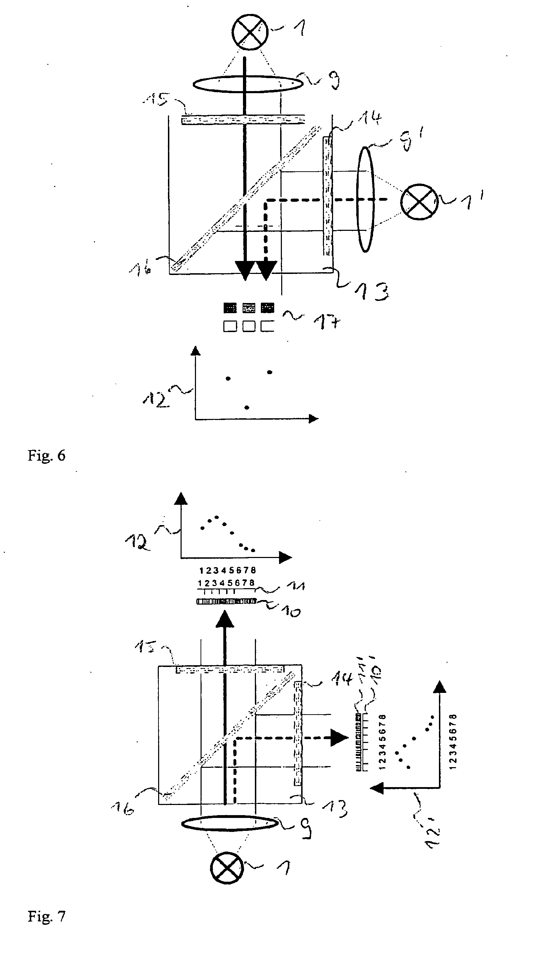

Fig. 6 zeigt in einem zweiten Beispiel die Nutzung zur Bestimmung bzw. Erkennung eines Filtersatzes. Dabei wird in einer Anordnung analog zu Fig. 5 ein Spektralsensor 17 zur Bestimmung des Norm-Farborts eingesetzt wie beispielsweise von der Firma Mazet Jena hergestellt wird. Hier wird die Erkennung des Filtersatzes über den Vergleich mit in einer Datenbank abgespeicherten Werten für den Farbort bzw. Farbkennwerten durchgeführt.

Fig. 7 zeigt als Alternative zu der Anordnung aus Fig. 5 die Nutzung nur einer Weißlichtquelle 1 in Verbindung mit zwei spektralen Detektoren 10, 11 (für den Emissionsstrahlengang) und 10', 11' (für den Anregungsstrahlengang) zur Bestimmung eines Filtersatzes.

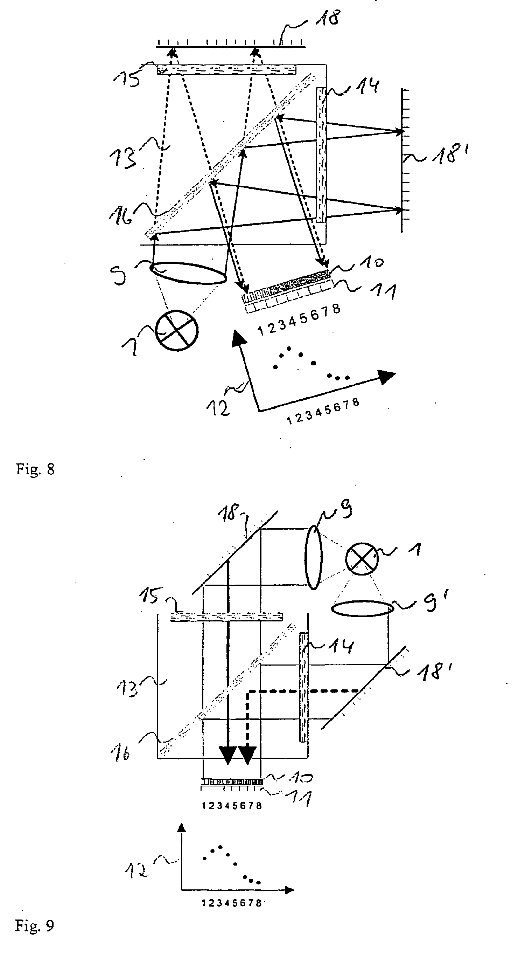

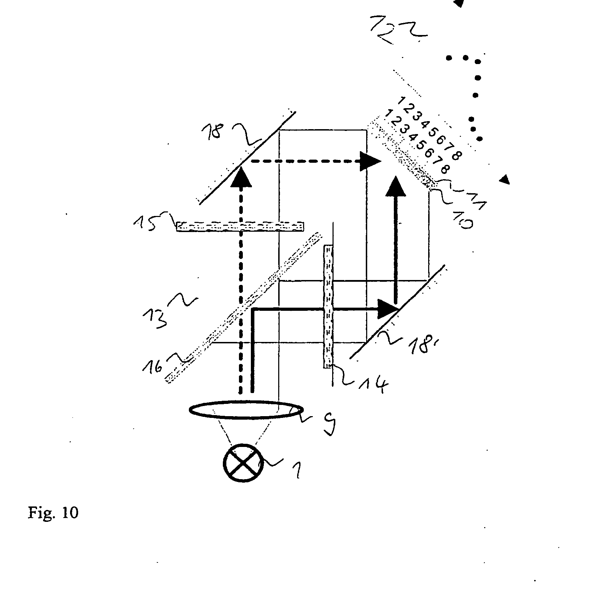

Fig. 8, 9 und 10 zeigen Weiterentwicklungen der Anordnung aus Fig. 5, bei denen je eine Weißlichtquelle 1 und ein spektraler Detektor 10, 11 zur Bestimmung eines Filtersatzes ausreicht. Dazu wird das Licht der gemeinsamen Weißlichtquelle 1 durch reflektive Elemente 18, 18' so abgelenkt, dass es sowohl den Anregungsfilter 14 als auch den Emissionsfilter 15 durchstrahlt und mittels des Teilerspiegels 16 vereinigt auf den spektralen Detektor 10,11 fällt. Die Erkennung der Filtersätze erfolgt auch dabei nach dem weiter oben beschriebenen Verfahren zur Auswertung der Sensorwerte 12.

Dabei ist in Rechnung zu stellen, dass bei der Anordnung nach Fig. 8 die beiden Filter 14, 15 und der Teilerspiegel 16 jeweils zwei Mal vom Licht der Weißlichtquelle 1 passiert werden, die spektrale Wirkung dieser Elemente daher jeweils quadriert. Dieses ist auch bei der Festlegung der Vergleichsdaten der bekannten Filtersätze in der Datenbank zu berücksichtigen.

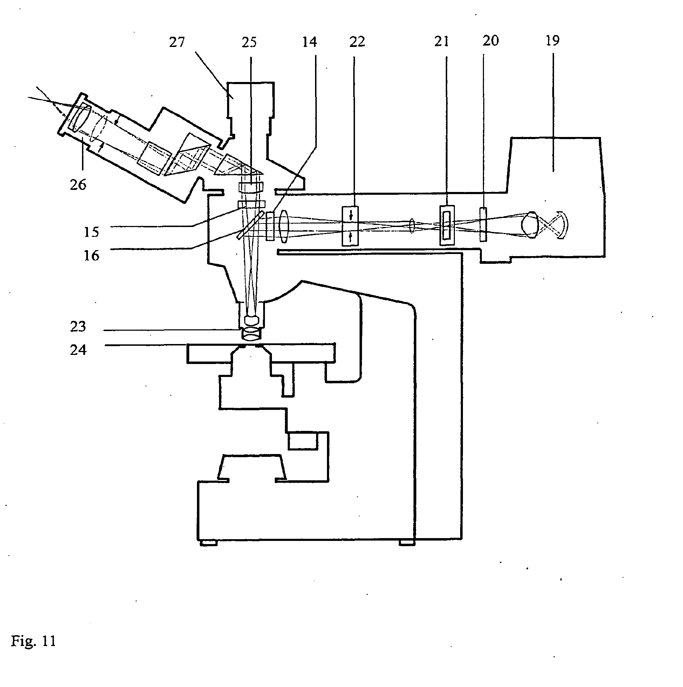

In Fig. 11 ist schematisch der Gesamtstrahlengang in einem Mikroskop dargestellt. Von einer Lichtquelle 19 wird das Licht über ein Wärmeschutzfilter 20, die Aperturblende 21 und die Leuchtfeldblende 22 auf den Anregungsfilter 14 gerichtet. Der Teilerspiegel 16 reflektiert das Anregungslicht über das Objektiv 23 auf das Objekt 24. Das vom Anregungslicht im Objekt 24 erzeugte Fluoreszenzlicht passiert wiederum das Objektiv 23 und wird jetzt vom Teilerspiegel 16 durchgelassen und durch das Emissionsfilter auf die Tubuslinse 25 und von dieser über ein Prismensystem in die Okulare 26 abgebildet. Alternativ kann das Licht auch mittels einer am Fototubus 27 angebrachte Kamera abgebildet werden. Dabei sind hier Anregungsfilter 14, Emissionsfilter 15 und Teilerspiegel 16 als getrennte Bauelemente dargestellt, bilden aber zusammen den Filtersatz. 13.

Die Erfindung ist nicht an die dargestellten Ausführungsbeispiele gebunden, fachmännische Weiterentwicklungen führen nicht zu einem Verlassen des durch die Patentansprüche definierten Schutzumfangs.

## Patentansprüche

1. Mikroskop mit einer Vorrichtung zur Erkennung von in den Strahlengang des Mikroskops einbringbaren Filtersätzen (13), bei dem vorzugsweise außerhalb des Strahlengangs des Mikroskops eine Anordnung zur Bestimmung der spektralen Eigenschaften dieser Filtersätze (13) in mindestens vier diskreten Spektralbereichen vorgesehen ist, und wobei diese Anordnung zur Bestimmung der spektralen Eigenschaften mit einer Recheneinheit verbunden ist, welche eine vorgeschriebene Verhältnisbildung der Werte der einzelnen Spektralbereiche untereinander realisiert und wobei diese Recheneinheit mit einem Speicher für vorab gespeicherte Werte verbunden ist, wobei die Vorrichtung eine Lichtquelle (1) und einen spektralen Detektor (10, 11) umfasst,
wobei die Anordnung zwei reflektive Elemente (18, 18') aufweist und die Lichtquelle (1), der spektrale Detektor (10, 11), der Filtersatz (13) sowie die zwei reflektiven Elemente (18, 18') so angeordnet sind, dass das von der Lichtquelle (1) emittierte Licht vor und/oder nach der Ablenkung durch die reflektiven Elemente (18, 18') durch den Filtersatz (13) tritt und vereinigt auf den spektralen Detektor (10,11) fällt.

2. Mikroskop mit einer Anordnung nach Anspruch 1, wobei die Anordnung zur Bestimmung der spektralen Eigenschaften eine Weisslichtquelle (1), welche den Filtersatz (13) mit Strahlung beaufschlagt, eine dem Filtersatz (13)
nachgeordnete Komponenrte (10) zur räumlichen Aufspaltung Strahlung nach Wechselwirkung mit dem Filtersatz (13) in verschiedene Spektralbereiche und einen spektralen Detektor (11) bestehend aus einer sensorzeile, diskret angeordneten sensoren, oder einem sensorarray zur Messung der auf die verschiedenen Bereiche des Detektors (11) fallende Strahlung aufweist.

3. Mikroskop mit einer Anordnung nach Anspruch 2, wobei die Anordnung zur räumlichen Aufspaltung in die verschiedenen Spektralbereiche mindestens ein Element aus der Gruppe Farbverlaufsfilter, Farbfilter mit diskreten Farbbereichen, Prisma, Gitter ist.

4. Mikroskop mit einer Anordnung nach Anspruch 1, wobei die Anordnung zur Bestimmung der spektralen Eigenschaften eine durchstimmbare Lichtquelle (1), welche den Filtersatz (13) mit Strahlung beaufschlagt aufweist.

5. Mikroskop mit einer Anordnung nach Anspruch 4, wobei die durchstimmbare Lichtquelle (1) aus einer räumlich diskreten Anordnung von Lichtquellen unterschiedlicher spektraler Charakteristik besteht.

6. Mikroskop mit einer Anordnung nach Anspruch 5, wobei die Lichtquellen LED's mit verschiedenen Spektralverteilungen des emittierten Lichtes sind, welche in Form eines Arrays oder einer Zeile angeordnet sind.

## Claims

1. Microscope having a device for recognizing filter sets (13) which can be introduced into the beam path of the microscope, in the case of which microscope there is provided, preferably outside the beam path of the microscope, an arrangement for determining the spectral characteristics of these filter sets (13) in at least four discrete spectral ranges, and this arrangement for determining the spectral characteristics being connected to an arithmetic logic unit which implements a prescribed formation of the ratio between the values of the individual spectral ranges, and this arithmetic logic unit being connected to a memory for previously stored values, the device comprising a light source (1) and a spectral detector (10, 11), in which the arrangement has two reflective elements (18, 18') and the light source (1), the spectral detector (10, 11), the filter set (13) and the two reflective elements (18, 18') are arranged such that, before and/or after the deflection by the reflective elements (18, 18'), the light emitted by the light source (1) passes through the filter set (13) and impinges on the spectral detector (10, 11) in a combined fashion.

2. Microscope having an arrangement according to Claim 1, in which the arrangement for determining the spectral characteristics has a white-light source (1) which irradiates the filter set (13), a component (10), downstream of the filter set (13), for spatially splitting the radiation after interaction with the filter set (13) into various spectral ranges, and a spectral detector (11), comprising a sensor line, discretely arranged sensors, or a sensor array, for measuring the radiation impinging on the various regions of the detector (11).

3. Microscope having an arrangement according to Claim 2, in which the arrangement for spatially splitting into the various spectral ranges is at least one element from the group of colour profile filter, colour filter with discrete colour ranges, prism, grating.

4. Microscope having an arrangement according to Claim 1, in which the arrangement for determining the spectral characteristics has a tunable light source (1) which irradiates the filter set (13).

5. Microscope having an arrangement according to Claim 4, in which the tunable light source (1) comprises a spatially discrete arrangement of light sources of different spectral characteristics.

6. Microscope having an arrangement according to Claim 5, in which the light sources are LEDs having various spectral distributions of the emitted light, and are arranged in the form of an array or a line.

## Revendications

1. Microscope avec dispositif de reconnaissance de jeux de filtres (13) pouvant s'insérer dans le chemin des rayons du microscope, dans lequel un agencement pour la détermination des caractéristiques spectrales de ces jeux de filtres (13) dans au moins quatre plages spectrales discrètes est prévu de préférence à l'extérieur du chemin des rayons du microscope, et dans lequel cet agencement pour la détermination des caractéristiques spectrales est relié à une unité de calcul qui réalise une formation imposée du rapport mutuel des valeurs des plages spectrales individuelles et dans lequel cette unité de calcul est reliée à une mémoire pour des valeurs mémorisées préalablement, dans lequel l'agencement comporte une source lumineuse (1) et un détecteur spectral (10, 11),
l'agencement présentant deux éléments réflectifs (18, 18') et la source lumineuse (1), le détecteur spectral (10, 11), le jeu de filtres (13) ainsi que les deux éléments réflectifs (18, 18') étant disposés de telle sorte que la lumière émise par la source lumineuse (1) avant et/ou après la déviation par les éléments réflectifs (18, 18') traverse le jeu de filtres (13) et frappe de façon regroupée le détecteur spectral (10, 11).

2. Microscope avec un agencement selon la revendication 1, dans lequel l'agencement pour la détermination des caractéristiques spectrales comporte une source de lumière blanche (1) qui frappe le jeu de filtres (13) avec un rayonnement, un composant (10) disposé en aval du jeu de filtres (13) pour la séparation spatiale du rayonnement après interaction avec le jeu de filtres (13) dans différentes plages spectrales et un détecteur spectral (11) constitué d'une ligne de capteurs, de capteurs disposés de manière discrète, ou d'une mosaïque de capteurs, pour la mesure du rayonnement frappant les différentes plages du détecteur (11).

3. Microscope avec un agencement selon la revendication 2, dans lequel l'agencement pour la séparation spatiale dans les différentes plages spectrales est au moins un élément du groupe des filtres de dégradés de couleurs, filtres de couleurs à plages de couleurs discrètes, prismes, réseaux.

4. Microscope avec un agencement selon la revendication 1, dans lequel l'agencement pour la détermination des caractéristiques spectrales comporte une source lumineuse accordable (1) qui frappe le jeu de filtres (13) avec du rayonnement.

5. Microscope avec un agencement selon la revendication 4, dans lequel la source lumineuse accordable (1) est constituée d'un agencement spatial discret de sources lumineuses de différentes caractéristiques spectrales.

6. Microscope avec un agencement selon la revendication 5, dans lequel les sources lumineuses sont des LED avec différentes répartitions spectrales de la lumière émise, disposées sous la forme d'une mosaïque ou d'une ligne.
